# FASCICULE DE BREVET EUROPEEN

(11) **EP 1 549 542 B1**
(45) Date de publication et mention de la délivrance du brevet: **08.12.2010**
(21) Numéro de dépôt: 03794718.1
(22) Date de dépôt: 11.09.2003
(51) Int. Cl.: B62M 13/04

(54) **ORGANE DE FIXATION DE DISPOSITIF D ENTRAINEMENT DE VELO**
GLIED ZUR BEFESTIGUNG EINER FAHRRADANTRIEBSVORRICHTUNG
MEMBER FOR FIXING A BICYCLE DRIVING DEVICE

(30) Priorité: 12.09.2002 EP 02447175
(43) Date de publication de la demande: 06.07.2005
(73) Titulaire: Motte dit Falisse, Gilles Jacques Abel Marie, 4102 Ougrée (BE)
(72) Inventeur: Motte dit Falisse, Gilles Jacques Abel Marie, 4102 Ougrée (BE)
(86) Numéro de dépôt international: PCT/BE2003/000150
(87) Numéro de publication internationale: WO 2004/024549

(56) Documents cités:
- EP-A- 0 155 185
- EP-A- 0 644 110
- EP-A- 1 031 505
- CH-A- 685 757
- DE-U- 20 102 265
- DE-U- 29 921 956
- FR-A- 2 346 178
- US-A- 5 671 821
- US-B1- 6 192 773

## Description

La présente invention est relative à un organe de fixation de dispositif d'entraînement par friction de roue de vélo.

Les systèmes d'entraînement pour vélo proposent une aide pour pédaler au moyen d'un moteur additionnel. Cette aide est généralement constituée d'un mécanisme d'entraînement agencé sur l'une des roues du vélo. Ainsi, la puissance du moteur entraîne la roue et s'additionne à la puissance exercée par la pression sur le pédalier, ce qui permet au cycliste de fournir moins d'efforts.

Un tel système d'entraînement selon le préambule de la revendication 1 est par exemple illustré dans le brevet européen EP-A-0 155.185. Ce système connu est pourvu d'un moteur d'entraînement connecté à l'une des roues du vélo par l'intermédiaire d'une roue d'entraînement. Dans ce système d'entraînement, l'organe de fixation du dispositif d'entraînement comprend une attache à relier à un élément du cadre du vélo, le dispositif d'entraînement étant agencé de manière à pouvoir pivoter autour d'un axe prévu sur cette attache.

Malheureusement, la plupart de ces systèmes d'entraînement sont fixés au cadre du vélo de manière soit permanente, soit non adaptative. Les systèmes de fixation connus, étant prévus pour un type particulier de configuration, ne s'adaptent que très difficilement à un autre type de configuration. Ainsi, lorsqu'un cycliste désire changer de vélo pour un autre vélo ayant une configuration différente ou simplement désire modifier l'emplacement du système d'entraînement sur son vélo, il doit bien souvent changer de système de fixation ou changer de système d'entraînement.

Le but de la présente invention est donc de proposer un organe de fixation de dispositif d'entraînement par friction de roue de vélo permettant de s'adapter aisément à chaque type de vélo conventionnel.

Ce but est atteint par un organe de fixation de dispositif d'entraînement par friction de roue de vélo, comprenant
- une attache reliée à un élément de cadre du vélo,
- le dispositif d'entraînement par friction étant agencé de manière à pouvoir pivoter librement autour d'un premier axe de pivotement,
   cet organe de fixation comprenant en outre
- une première partie, à laquelle le dispositif d'entraînement est relié de manière à pouvoir pivoter librement autour dudit premier axe de pivotement,
- une deuxième partie, qui est reliée à la première partie de manière à permettre un pivotement mutuel entre elles autour d'un deuxième axe de pivotement, et qui comporte ladite attache, à distance dudit deuxième axe de pivotement, et
- des moyens d'ajustement capables de fixer de manière détachable la première partie par rapport à la deuxième partie dans une position angulaire réglable par le pivotement mutuel susdit.

Ainsi, le dispositif d'entraînement ne pivote pas directement par rapport au cadre du vélo ou à une pièce fixe par rapport à ce cadre, mais au contraire par rapport à une pièce intermédiaire, appelée première partie de l'organe de fixation, dont la position angulaire par rapport à la deuxième partie peut être préalablement ajustée. De cette manière, le dispositif d'entraînement peut s'adapter au mouvement de la roue par rapport au cadre du vélo, en particulier lorsque cette dernière est amortie. L'organe de fixation peut être adapté par simple pivotement à la configuration du cadre, par exemple à l'emplacement du point d'attache ou à celui du dispositif d'entraînement.

Selon l'invention, le premier axe de pivotement est situé à distance du deuxième axe de pivotement et l'organe de fixation comprend des moyens de modification d'écartement entre le premier axe de pivotement et le deuxième axe de pivotement. D'une manière préférentielle, la première partie présente plusieurs sièges de pivotement pour régler au choix la position du premier axe de pivotement. De cette manière, on obtient un réglage très aisé et particulièrement adaptable à tout modèle de vélo et à tout emplacement du cadre pour l'organe de fixation et donc le dispositif d'entraînement.

Selon une autre forme de réalisation, l'organe de fixation peut comprendre au moins un arrêt agencé pour délimiter un angle de débattement entre ledit dispositif d'entraînement et ladite première partie. L'angle de débattement ainsi délimité permet de réduire le risque que le dispositif d'entraînement ne saute en se déconnectant de la roue. Suite à son passage sur une irrégularité de la voie de circulation, le dispositif d'entraînement peut rebondir sur le pneu du vélo et basculer autour du premier point de pivotement.

D'autres formes de réalisation de structures modulaires suivant l'invention sont indiquées dans les revendications annexées. De plus, d'autres détails et particularités de l'invention ressortiront de la description donnée ci-après, à titre non limitatif et avec référence aux dessins annexés.

Dans les dessins :
La figure 1 est une vue en perspective schématique d'une forme de réalisation d'un organe de fixation selon l'invention.
La figure 2 illustre dans une vue latérale un organe de fixation suivant l'invention, fixé sur un premier type de vélo.
La figure 3 illustre dans une vue latérale l'organe de fixation selon la figure 2, fixé sur un second type de vélo.
La figure 4 est une vue en perspective des première et deuxième parties d'une variante d'organe de fixation suivant l'invention.
La figure 5 est une vue du dessus de la liaison entre les deux parties de l'organe de fixation suivant la figure 4.
La figure 6 représente une vue latérale d'un détail de construction d'une variante de deuxième partie de l'organe de fixation.
La figure 7 est une vue latérale d'encore une autre variante d'organe de fixation suivant l'invention.

Dans les dessins, une même référence a été attribuée à un même élément ou à un élément analogue.

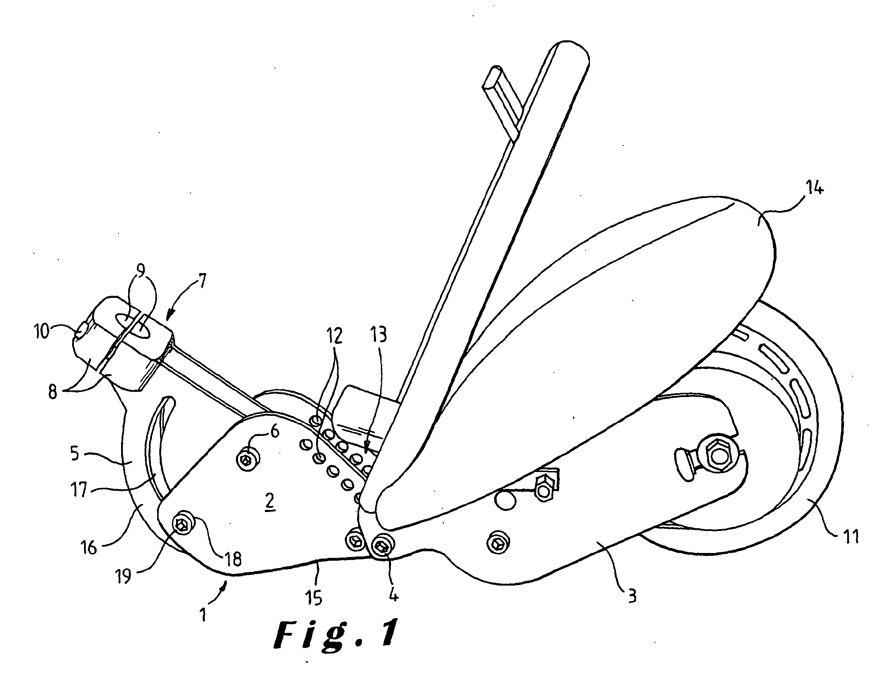

Si l'on se réfère à la figure 1, l'organe de fixation 1 comprend une première partie 2 reliée au dispositif d'entraînement 3 de manière à pouvoir pivoter autour d'un premier axe de pivotement 4. De plus, une deuxième partie 5 est attachée à la première partie 2, de manière à leur permettre un pivotement mutuel autour d'un deuxième axe de pivotement 6. La deuxième partie comprend aussi une attache 7 située à une distance prédéterminée dudit deuxième axe de pivotement 6.

Cette attache 7 peut comprendre, par exemple, deux blocs 8, le premier bloc comportant une face concave 9 placée face à la face concave du deuxième bloc et ces blocs étant reliés par des moyens de fixation tels que, par exemple, des vis de serrage 10. L'un des blocs peut être solidaire de la deuxième partie de l'organe de fixation.

De manière à fixer l'attache sur une partie du guidon, l'opérateur peut dévisser les vis de serrage de manière à séparer les deux blocs et placer le bloc solidaire de la deuxième partie contre la partie du vélo sur laquelle est fixé l'organe de fixation. Ensuite, l'opérateur peut placer l'autre bloc à l'opposé et visser les vis de serrage de manière à fixer les deux blocs autour de la partie du guidon. De même, la forme des côtés des blocs, entrant en contact avec le vélo, peut varier de manière à épouser au mieux les pourtours de l'endroit sur lequel l'attache sera fixée.

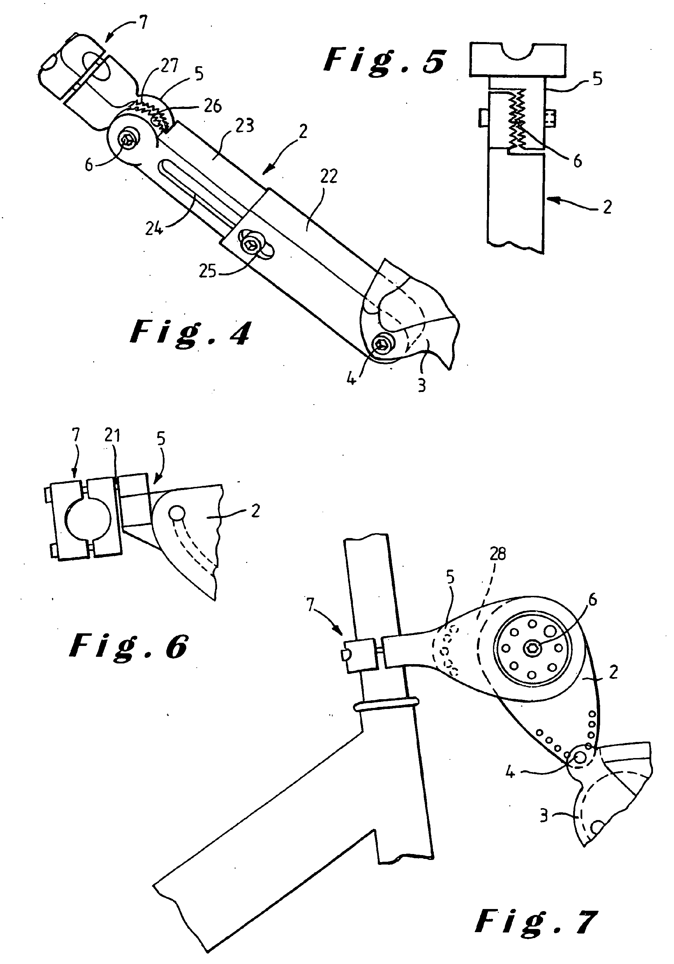

On peut aussi imaginer que l'attache 7 soit elle-même reliée de manière détachable à la deuxième partie 5 de l'organe de fixation. On peut aussi concevoir par exemple que, comme illustré à la figure 6, l'attache soit supportée sur la deuxième partie 5 par un pivot 21 permettant d'adapter la position de l'attache de la façon la plus appropriée sur l'élément de cadre auquel l'organe de fixation doit être rattaché. Dans la forme de réalisation illustrée, le pivot 21 est formé par un des boulons de serrage de l'attache 7.

Dans le mode de réalisation illustré sur les figures 1 à 3, le dispositif d'entraînement est composé d'un moteur 21, par exemple électrique, relié à une roue d'entraînement par un moyen de transmission non représenté, tel qu'une chaîne ou courroie, la roue d'entraînement agissant sur le pneu du vélo en lui communiquant son mouvement par friction.

Selon une autre forme de réalisation de l'invention, les premier et deuxième axes de pivotement peuvent être coaxiaux le long du bord proche du dispositif d'entraînement. Ainsi, un seul axe pourrait servir de pivot pour le débattement entre le dispositif d'entraînement et l'ensemble constitué de la première et de la deuxième partie. Cette forme de réalisation pourrait s'avérer plus économique à la fabrication.

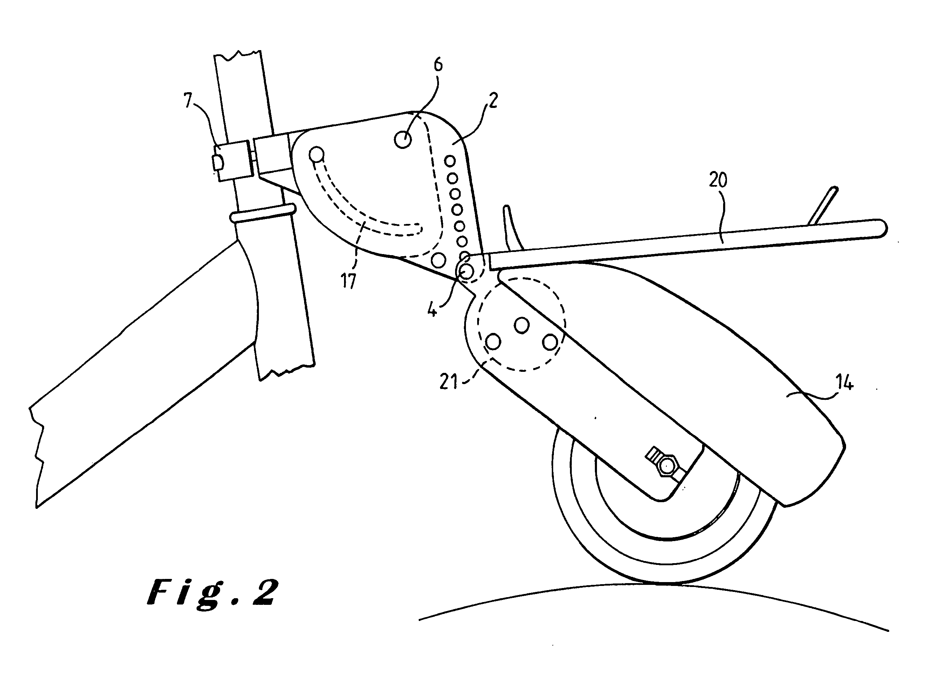

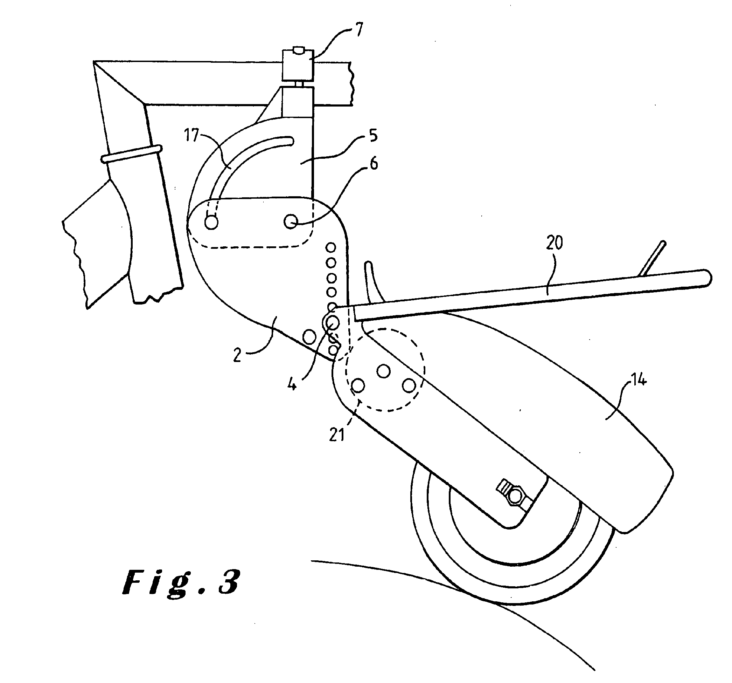

De plus, la première partie 2 de l'organe de fixation peut aussi comprendre une série de trous 12 proches du dispositif d'entraînement. Ces trous représentant différents sièges de pivotement permettent un réglage supplémentaire pour le placement du dispositif d'entraînement. En effet, ces trous permettent de modifier l'emplacement du premier axe de pivotement et donc d'ajuster la longueur entre l'attache et le dispositif d'entraînement de manière à placer au mieux la roue d'entraînement sur le pneu du vélo selon la configuration du vélo (voir par exemple les différentes positions illustrées sur les figures 2 et 3).

De plus, l'organe de fixation peut aussi comprendre au moins un arrêt agencé pour délimiter un angle de débattement entre ledit dispositif d'entraînement et ladite première partie. Dans le mode de réalisation illustré sur la figure 1 l'organe de fixation comprend deux arrêts, le premier arrêt 13 étant l'un des côtés même de la première partie 2 de l'organe de fixation et le deuxième arrêt 15 étant situé sur l'autre côté de l'organe de fixation.

Ainsi, lorsque le dispositif d'entraînement rebondit, par exemple suite à une bosse rencontrée par la roue, il bascule autour du premier axe de pivotement 4, de manière à être stoppé par le premier arrêt 13. Dans ce cas-ci, en effet, lors de la rotation autour du premier axe de rotation, la coque 14 du dispositif d'entraînement rencontre le côté 13 qui le stoppe dans son mouvement rotatoire et permet au dispositif d'entraînement de retomber vers la roue par gravité.

De même, l'organe de fixation peut être aussi pourvu d'un moyen élastique courant, non représenté, qui force, avec un certain degré de liberté, le dispositif d'entraînement à rester essentiellement en contact avec la roue.

Le deuxième arrêt 15 permet au dispositif d'entraînement, lorsque la roue s'écrase ou se dérobe violemment sous le dispositif d'entraînement, d'être stoppé suivant un certain angle de débattement de manière à ce que lorsque la roue reviendra à sa position initiale, le dispositif d'entraînement ne vienne rencontrer la roue trop violemment. Par exemple, si l'inclinaison du dispositif d'entraînement par rapport à l'axe de débattement de la roue était de 90° ou plus, la rencontre entre la roue et le dispositif d'entraînement pourrait provoquer des contraintes importantes dans le premier axe de pivotement qui pourrait le tordre ou le casser.

De plus, sur les figures 1 à 3, l'organe de fixation comprend aussi des moyens d'ajustement 16 qui comprennent, sur l'une des parties de l'organe de fixation, par exemple sur la deuxième partie 5, au moins un premier orifice 17 s'étendant selon un arc de courbure ayant pour centre le deuxième axe de pivotement 6 et un second orifice 18, par exemple situé sur la première partie 2 de l'organe de fixation. Ce second orifice 18 est agencé pour se placer en face d'un desdits au moins un premier orifice. En outre, un moyen de maintien et de serrage est agencé pour s'engager dans le premier orifice 17 et dans le second orifice 18 pour maintenir ainsi les deux parties solidaires l'une de l'autre, après serrage. Dans ce cas-ci, les moyens de maintien 19 comprennent un écrou et un boulon.

Comme illustré aux figures 2 et 3, l'organe de fixation peut s'adapter à différentes configurations de vélo. Ainsi, comme représenté sur la figure 2, l'organe de fixation permet d'attacher le dispositif d'entraînement sur une barre sensiblement verticale d'un vélo. Il est également possible, comme représenté sur la figure 3, d'attacher l'organe de fixation sur une barre sensiblement horizontale du vélo.

De manière à régler l'angle de pivotement de la première partie par rapport à la deuxième, le cycliste fait pivoter mutuellement autour du deuxième axe de pivotement 6 la deuxième partie 5 et la première partie 2 de l'organe de fixation. Ensuite, dans la position angulaire appropriée, les moyens de fixation 19, dans ce cas-ci un écrou et un boulon, sont serrés de manière à appuyer la première partie sur la deuxième ce qui solidarise ensemble ces deux parties.

En outre, le dispositif d'entraînement peut comprendre une coque pourvue d'un porte-bagages 20, le porte-bagages étant de préférence agencé pour transporter un sac déposé à cheval sur le porte-bagages. Le sac peut comprendre par exemple deux emplacements, chacun agencé pour contenir par exemple des batteries alimentant le moteur du dispositif d'entraînement. Lorsque le sac est placé à cheval sur le porte-bagages, les batteries seront placées de manière à équilibrer le poids de part et d'autre du dispositif d'entraînement.

Dans l'exemple de réalisation illustré sur la figure 4, la première partie 2 est constituée de deux pièces 22 et 23 capables de coulisser l'une par rapport à l'autre, par exemple de manière télescopique. La première pièce 22 est creuse et supporte le dispositif d'entraînement 3 en permettant son pivotement autour de l'axe 4. La deuxième pièce 23 coulisse à l'intérieur de la première pièce 22 et est reliée à la deuxième partie 5 de manière à permettre un pivotement mutuel. Au travers de fentes allongées 24 de la deuxième pièce 23, un boulon de serrage 25 supporté par la première pièce 22 peut être passé et serré. Lorsque l'écartement entre les deux axes de pivotement 4 et 6 est approprié, le boulon 25 peut être serré pour bloquer les deux pièces dans cette position.

La première partie 2 présente à une extrémité un crantage circulaire 26 dont le centre est formé par l'axe de pivotement 6. De même la deuxième partie 5 présente un crantage correspondant 27 dont le centre est lui aussi formé par l'axe de pivotement 6. Lorsque les deux parties 2 et 5 ont acquis leur position angulaire appropriée le boulon de serrage passant par l'axe de pivotement 6 est serré et les crantages s'engagent l'un dans l'autre et coopèrent pour bloquer les deux parties ensembles.

Sur la figure 8, on a représenté encore une autre forme de réalisation d'organe de fixation. Autour de l'axe de pivotement 6, chacune des parties présente des orifices qui s'étendent suivant des arcs de cercle égaux et concentriques à l'axe. Il est ainsi possible par un boulon de serrage de fixer la position angulaire mutuelle des deux parties de l'organe de fixation.

Il doit être entendu que la présente invention n'est en aucune façon limitée aux formes de réalisation décrites ci-dessus et que bien des modifications peuvent y être apportées sans sortir du cadre des revendications annexées.

On peut notamment imaginer, entre la première partie et la deuxième partie du dispositif, une combinaison non illustrée, d'une première partie 2, de type télescopique semblable à celle illustrée sur la figure 4 et d'une deuxième partie 5 à réglage rotatif semblable à celle illustrée sur la figure 7.

On peut aussi concevoir, comme illustré en traits interrompus sur la figure 7, une forme de réalisation de la deuxième partie 5 où l'attache 7 supporte de manière angulairement ajustable un élément intermédiaire 28.

On peut aussi prévoir que l'axe du moteur 21 soit l'axe de la roue 11.

## Revendications

1. Organe de fixation (1) de dispositif d'entraînement par friction de roue de vélo, comprenant
- une attache (7) reliée à un élément de cadre du vélo,
- le dispositif d'entraînement par friction (3) étant agencé de manière à pouvoir pivoter librement autour d'un premier axe de pivotement (4),
- une première partie (2), à laquelle le dispositif d'entraînement est relié de manière à pouvoir pivoter librement autour dudit premier axe de pivotement (4),
- une deuxième partie (5), qui est reliée à la première partie (2) de manière à permettre un pivotement mutuel entre elles autour d'un deuxième axe de pivotement (6) avant de serrer et maintenir la première partie (2) et la deuxième partie (5) solidaires l'une de l'autre, et qui comporte ladite attache (7), à distance dudit deuxième axe de pivotement, et le organe de fixation est relié à ledit élément de cadre seulement par ladit attache (7), et
- des moyens d'ajustement (17-19; 26-27) capables de fixer de manière détachable la première partie (2) par rapport à la deuxième partie (5) dans une position angulaire réglable par le pivotement mutuel susdit, tel que apres l'ajustement la première partie (2) est fixée par rapport à la deuxième partie (5), et **caractérisé en ce que** l'organe de fixation comprend
- des moyens de modification d'écartement (22-25) entre le premier axe de pivotement (4) et le deuxième axe de pivotement (6), afin d'ajuster la longueur entre l'attache et le dispositif d'entraînement de manière à placer au mieux la roue d'entraînement sur le pneu du vélo selon la configuration du vélo.

2. Organe de fixation suivant la revendication 1, **caractérisé en ce que** la première partie (2) est constituée de deux pièces (22, 23) capables de coulisser l'une par rapport à l'autre, l'une (22) des deux pièces supportant le dispositif d'entraînement (3) de manière à permettre à celui-ci de pivoter autour du premier axe de pivotement (4), l'autre (23) des deux pièces étant reliée à la deuxième partie (5) de manière à permettre ledit pivotement mutuel.

3. Organe de fixation suivant l'une quelconque des revendications 1 à 2, **caractérisé en ce qu'**il comprend au moins un arrêt (13), agencé pour délimiter un angle de débattement entre ledit dispositif d'entraînement et ladite première partie.

4. Organe de fixation suivant l'une des revendications 1 à 3, **caractérisé en ce que** lesdits moyens d'ajustement comprennent, sur l'une des parties de l'organe de fixation, au moins un premier orifice (17) s'étendant selon un arc de courbure ayant pour centre le deuxième axe de pivotement (6), et, sur l'autre partie, un second orifice (18) situé en face d'au moins un desdits au moins un premier orifice (17), ainsi que des moyens de maintien et de serrage (19) agencés pour s'engager dans ledit au moins un premier orifice (17) et ledit second orifice (18) et pour maintenir ainsi les deux dites parties solidaires l'une de l'autre, après serrage.

5. Organe de fixation suivant l'une des revendications 1 à 3, **caractérisé en ce que** lesdits moyens d'ajustement comprennent, sur l'une des parties de l'organe de fixation, un premier crantage (26)s'étendant selon un premier arc de courbure ayant pour centre le deuxième axe de pivotement (6) et, sur l'autre partie, un deuxième crantage (27) capable de coopérer avec le premier et s'étendant selon un deuxième arc de courbure ayant pour centre le deuxième axe de pivotement (6), ainsi que des moyens de serrage des deux parties avec leurs crantages respectifs mutuellement engagés.

6. Organe de fixation suivant l'une.des revendications 1 à 2, **caractérisé en ce que** ledit dispositif d'entraînement (3) comprend un moteur (21) agencé pour entraîner en rotation une roue d'entraînement (11) pouvant agir par friction sur la roue du vélo.

7. Organe de fixation suivant l'une des revendications 1 à 6, **caractérisé en ce que** la première partie (2) présente plusieurs sièges de pivotement (12) pour régler au choix la position du premier axe de pivotement (4).

8. Organe de fixation suivant l'une des revendications 1 à 7, **caractérisé en ce que**, dans la deuxième partie (5), ladite attache (7) supporte un élément intermédiaire (28) de manière angulairement ajustable.

## Claims

1. A member (1) for fixing a device for driving a bicycle wheel by friction, comprising
- a fastener (7) connected to an element of the bicycle frame,
- the friction drive device (3) being arranged so as to be able to pivot freely about a first pivot pin (4), **characterised in that** the fixing member comprises
- a first part (2), to which the drive device is connected so as to be able to pivot freely about the said first pivot pin (4),
- a second part (5), which is connected to the first part (2) so as to allow mutual pivoting between them about a second pivot pin (6) before clamping and keeping the first part (2) and the second part (5) integral with each other, and which comprises the said fastener (7), at a distance from the said second pivot pin, and the fixing member is connected to the said element of frame only by the said fastener(7),
- adjustment means (17-19 ; 26-27) capable of detachably fixing the first part (2) with respect to the second part (5) in an angular position adjustable by the above mentioned mutual pivoting so that after the adjustment the first part (2) is fixed with respect to the second part (5), and (.....)
means (22-25) of modifying the separation between the first pivot pin (4) and the second pivot pin (6), and therefore adjusting the length between the fastener and the drive device so as to place the drive wheel on the bicycle tyre as advantageously as possible according to the bicycle configuration.

2. The fixing member according to claim 1, **characterised in that** the first part (2) consists of two pieces (22, 23) capable of sliding with respect to each other, one (22) of the two pieces supporting the drive device (3) so as to enable the latter to pivot about the first pivot pin (4), the other one (23) of the two pieces being connected to the second part (5) so as to allow the said mutual pivoting.

3. The fixing member according to any one of claims 1 to 2, **characterised in that** it comprises at least one stop (13) arranged so as to delimit an angle of movement between the said drive device and the said first part.

4. The fixing member according to one of claims 1 to 3, **characterised in that** the said adjustment means comprise, on one of the parts of the fixing member, at least a first orifice (17) extending in an arc of curvature having the second pivot pin (6) as its centre, and, on the other part, a second orifice (18) situated facing at least one of the said at least one first orifice (17), as well as holding and clamping means (19) arranged so as to engage in the said at least one first orifice (17) and the said second orifice (18) and thus to keep the two said parts integral with each other, after clamping.

5. The fixing member according to one of claims 1 to 3, **characterised in that** the said adjustment means comprise, on one of the parts of the fixing member, a first serration (26) extending in a first arc of curvature having the second pivot pin (6) as its centre and, on the other part, a second serration (27) capable of cooperating with the first and extending in a second arc of curvature having the second pivot pin (6) as its centre as well as means of clamping the two parts with their respective serrations mutually engaged.

6. The fixing member according to one of claims 1 to 2, **characterised in that** the said drive device (3) comprises a motor (21) arranged so as to drive in rotation a drive wheel (11) able to act by friction on the bicycle wheel.

7. The fixing member according to one of claims 1 to 6, **characterised in that** the first part (2) has several pivot seats (12) for adjusting the position of the first pivot pin (4) as required.

8. The fixing member according to one of claims 1 to 7, **characterised in that**, in the second part (5), the said fastener (7) supports an intermediate element (28) in an angularly adjustable manner.

## Patentansprüche

1. Steckhülse (1) für den Antrieb durch Reibung des Fahrradrads einschließlich
- einer Klemme (7), die mit einem Rahmenelement des Fahrrads verbunden ist.
- der Antrieb durch Reibung (3) ist darauf ausgelegt, um eine erste Umdrehungsachse (4) frei schwenken zu können, und
"**dadurch gekennzeichnet, dass** die Steckhülse Folgendes umfasst":
- einen ersten Teil (2), mit dem der Antrieb in einer Weise verbunden ist, in der er um die genannte erste Umdrehungsachse (4) frei schwenken kann,
- einen zweiten Teil (5), der mit dem ersten Teil (2) auf eine Weise verbunden ist, in der
beide Teile untereinander um eine zweite Umdrehungsachse (6) schwenken können, bevor der erste (2) und der zweite Teil (5) gemeinsam angezogen und zusammengehalten werden, die Steckhülse umfasst darüber hinaus, im Abstand von der zweiten Umdrehungsachse, die genannte Klemme (7). Die Steckhülse ist mit dem genannten Rahmenelement durch die genannte Klemme (7) verbunden, und
- Einstellinstrumente (17 - 19; 26 - 27), die den ersten Teil (2) im Verhältnis zum zweiten Teil (5) in einer durch die genannte, gegenseitige Verschwenkung einstellbaren Winkelposition halten kann. Dadurch wird der erste Teil (2) nach Einstellung relativ zum zweiten Teil (5) befestigt. "..."
- Instrumenten zur Änderung des Abstands (22 - 25) zwischen der ersten Umdrehungsachse (4) und der zweiten Umdrehungsachse (6), um die Länge zwischen Klemme und Antrieb in einer Weise einstellen zu können, in der das Antriebsrad bestmöglich entsprechend der Konfiguration des Fahrrads am Fahrradpneu angeordnet wird.

2. Steckhülse gemäß der Anforderung 1, die **dadurch gekennzeichnet ist, dass** der erste Teil (2) aus zwei Teilen (22, 23) besteht, die relativ zueinander gleiten können. Einer (22) der beiden Teile trägt den Antrieb (3). Dadurch wird ermöglicht, dass dieses Teil um die erste Umdrehungsachse (4) schwenken kann. Das andere Teil (23) ist mit dem zweiten Teil (5) in einer Weise verbunden, durch die die genannte, gegenseitige Verschwenkung ermöglicht wird.

3. Steckhülse gemäß allen Anforderungen 1 bis 2, die **dadurch gekennzeichnet ist, dass** sie mindestens einen Anschlag (13) umfasst, der darauf ausgelegt ist, zwischen dem genannten Antrieb und dem genannten ersten Teil einen Schwenkwinkel zu begrenzen.

4. Steckhülse gemäß den Anforderungen 1 bis 3, die **dadurch gekennzeichnet ist, dass** die genannten Einstellinstrumente, auf einem der Teile der Steckhülse, mindestens eine Öffnung (17) umfassen, die sich entsprechend einem Bogen erstreckt, dessen Zentrum die zweite Umdrehungsachse (6) ist. Die Einstellinstrumente umfassen auf dem anderen Teil eine zweite Öffnung (18), die gegenüber mindestens einem des Genannten mindestens eine erste Öffnung (17) umfasst, sowie Instrumente zum Halten und Anziehen (19), die darauf ausgelegt sind, sich im Genannten mindestens durch eine erste Öffnung (17) und in der genannten zweiten Öffnung (18) einzubiegen, und **dadurch** die beiden, so genannten integrierten Teile nach dem Anziehen zu tragen.

5. Steckhülse entsprechend einer der Anforderungen 1 bis 3, die **dadurch gekennzeichnet ist, dass** die genannten Einstellinstrumente, auf einem der beiden Teile der Steckhülse, eine erste Riffelung (26) umfassen, die sich entsprechend einem ersten Bogen erstreckt, dessen Zentrum die zweite Umdrehungsachse (6) ist. Auf dem zweiten Teil befindet sich eine zweite Riffelung (27), die mit der ersten Riffelung gemeinsam funktionieren kann und sich entsprechend einem zweiten Bogen erstreckt, dessen Zentrum die zweite Umdrehungsachse ist (6). Instrumente zum Anzug der beiden Teile sind mit ihren jeweiligen, sich gegenseitig ineinander einbiegenden Riffelungen, ebenfalls zugehörig.

6. Steckhülse entsprechend einer der Anforderungen 1 bis 2, die **dadurch gekennzeichnet ist, dass** der genannte Antrieb (3) einen Motor (21) umfasst, der darauf ausgelegt ist, ein Antriebsrad (11), das durch Reibung auf das Fahrradrad einwirkt, in Rotation zu bringen.

7. Steckhülse entsprechend den Anforderungen 1 bis 6, die **dadurch gekennzeichnet ist, dass** der erste Teil (2) mehrere Schwenkpositionen (12) aufweist, um die Position der ersten Umdrehungsachse (4) nach Wunsch einstellen zu können.

8. Steckhülse entsprechend den Anforderungen 1 bis 7, die **dadurch gekennzeichnet ist, dass** durch die genannte Klemme (7) im zweiten Teil (5) ein Zwischenelement (28) winklig einstellbar befestigt wird.
